Europäisches Patentamt

European Patent Office

Office européen des brevets

(19)

(11) Numéro de publication : **0 317 543 B1**

# (12) FASCICULE DE BREVET EUROPEEN

(45) Date de publication du fascicule du brevet :
**01.04.92 Bulletin 92/14**

(51) Int. Cl.$^5$ : **G01F 15/14, G01F 15/00**

(21) Numéro de dépôt : **88870171.1**

(22) Date de dépôt : **14.11.88**

(54) Perfectionnements aux compteurs totalisateurs d'eau.

(30) Priorité : **20.11.87 BE 8701323**

(43) Date de publication de la demande :
**24.05.89 Bulletin 89/21**

(45) Mention de la délivrance du brevet :
**01.04.92 Bulletin 92/14**

(84) Etats contractants désignés :
**FR GB NL**

(56) Documents cités :
**EP-A- 0 088 883**
**EP-A- 0 214 364**

(56) Documents cités :
**AU-B- 472 768**
**DE-A- 2 110 813**
**FR-A- 813 424**
**FR-A- 2 263 496**

(73) Titulaire : **S.A. AQUACOM**
**rue de Magnée 110**
**B-4610 Beyne-Heusay (BE)**

(72) Inventeur : **Lenfant, Théo**
**rue Rotenberg 55**
**B-4700 Eupen (BE)**

(74) Mandataire : **Dellicour, Paul**
**Office de Brevets E. Dellicour rue Fabry 18/012**
**B-4000 Liège (BE)**

EP 0 317 543 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative aux compteurs totalisateurs d'eau et a pour but de faciliter le remplacement du totalisateur simple courant par un totalisateur avec lecture à distance.

Actuellement, ce remplacement nécessite l'ouverture du compteur et par conséquent la fermeture du circuit.

Pour remédier à cet inconvénient il a paru avantageux suivant l'invention de conformer le compteur de manière à ce que le remplacement puisse se faire dans éventuellement la cave de l'abonné sans ouvrir le compteur et sans coupure du circuit.

On connaît par le document FR-A-2 263 496 un compteur totalisateur d'eau, dont la tête est reliée au corps par un écrou pour enserrer entre eux un joint et une plaque d'étanchéité. La tête est surmontée, par des moyens appropriés, d'une coiffe plastique avec fenêtre, cette coiffe étant destinée à maintenir dans la tête le totalisateur.

Un compteur totalisateur du type décrit ci-dessus et réalisé suivant l'invention est caractérisé en ce que la coiffe comporte des clavettes saillant vers l'intérieur et en ce que la tête comporte des mortaises correspondantes, de manière à permettre une liaison des deux éléments par clipsage.

L'invention est décrite maintenant avec plus de détails sur la base des dessins annexés montrant en :

Figure 1 une coupe dans un compteur totalisateur suivant l'invention,

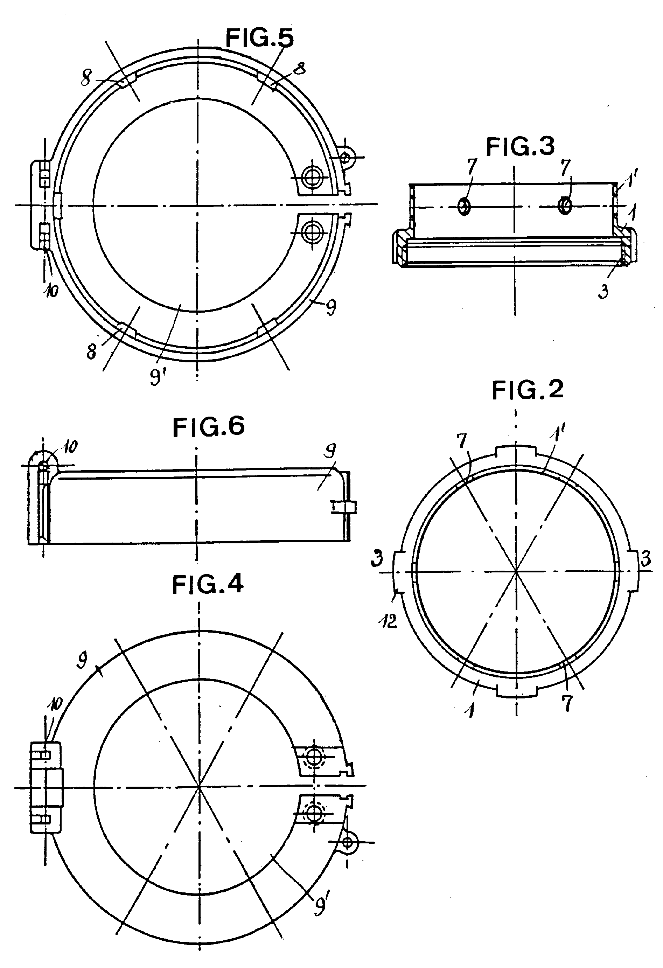

Figures 2 et 3 respectivement une vue en plan par dessus et une coupe par 3-3 de figure 2 de la tête du compteur à une autre échelle, et

Figures 4 à 6 respectivement une vue en plan par dessus, une vue en plan par dessous et une vue en élévation de la coiffe plastique, également à une autre échelle.

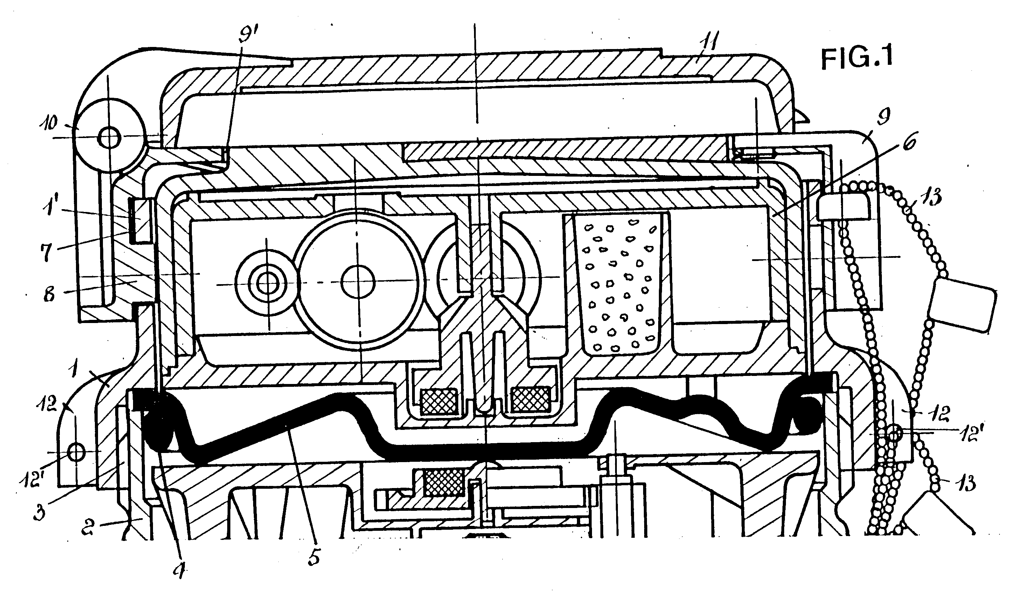

Comme on le voit aux dessins en figure 1 la tête 1 du compteur est séparée du corps 2 et montée sur celui-ci par l'intermédiaire d'un filetage 3.

La tête 1 étant vissée sur le corps 2 maintient en place le joint de tête 4 et la plaque d'étanchéité 5.

La partie supérieure 1' de la tête 1 est ouverte et cylindrique pour recevoir librement un totalisateur tel que 6.

Cette partie supérieure 1' présente sur sa périphérie un certain nombre de trous ou mortaises 7, dans lesquels sont destinées à venir se clipser des clavettes correspondantes 8 prévues sur la paroi interne d'une coiffe plastique 9. Cette coiffe plastique 9 sert à maintenir le totalisateur 6 dans son logement dans la tête 1 au-dessus de la plaque d'étanchéité 5. Elle comporte une découpe 9' pour permettre la lecture des données du totalisateur.

Cette coiffe 9 comporte des moyens 10 pour le montage et le pivotement d'un couvercle 11.

La tête 1 du compteur présente sur la périphérie de sa partie inférieure des joues 12 comportant chacune un oeillet ou trou 12' pour permettre la liaison par fil de plombage 13 à la coiffe de plastique 9 d'une part et au corps 2 du compteur d'autre part.

On comprend aisément de la description qui précède d'un compteur réalisé suivant l'invention qu'il suffit, après avoir rompu le fil de plombage 13 d'un compteur en service, d'enlever la coiffe de plastique 9 clipsée sur la tête 1 pour enlever le totalisateur courant 6 et le remplacer par un totalisateur avec lecture à distance sans ouvrir le compteur, donc éventuellement dans la cave de l'abonné, la plaque d'étanchéité 5 restant maintenue entre la tête 1 du compteur et le corps 2 de celui-ci.

## Revendications

1. Compteur totalisateur d'eau, dont la tête (1) est reliée au corps (2) par un filetage (3) à la manière d'un écrou pour enserrer entre eux un joint (4) et une plaque d'étanchéité (5), et sur la tête (1) duquel est montée par des moyens appropriés une coiffe plastique (9), avec fenêtre, destiné à maintenir dans ladite tête (1) le totalisateur (6), caractérisé en ce que la coiffe (9) comporte des clavettes (8) saillant vers l'intérieur et en ce que la tête (1) comporte des mortaises (7) correspondantes, de manière à permettre une liaison des deux éléments (1,9) par clipsage.

2. Compteur suivant la revendication 1, caractérisé en ce que la tête (1) et la coiffe plastique (9) d'une part, et le corps (2), d'autre part, comportent des oeillets externes (12') pour le placement entre eux d'un fil de plombage (13).

## Patentansprüche

1. Summierender Wasserzähler dessen Kopf (1) mit dem Gehäuse (2) durch ein Gewinde (3) schraubmutterweise verbunden ist um zwischen ihnen eine Dichtung (4) und eine Dichtungsplatte (5) festzuklemmen und auf dessen Kopf (1) eine Kunststoffkappe (9) mit Fenster mit entsprechenden Mitteln montiert ist um in diesem Kopf (1) den Zähler (6) festzuhalten, dadurch gekennzeichnet, dass die Kappe (9) nach innen vorspringende Keilen (8) aufweist und dass der Kopf (1) entsprechende Nutten (7) aufweist um eine clipsweise Verbindung der beiden Teilen (1, 9) zu ermöglichen.

2. Wasserzähler nach Anspruch 1, dadurch gekennzeichnet dass der Kopf (1) und die Kunststoffkappe (9) einerseits und das Gehäuse (2) andererseits aussen befindliche Ösen (12') aufweisen um einen Plombierdraht (13) zwischen ihnen einzustecken.

**Claims**

1. Water totaliser, of which the head (1) is connected to the body (2) by means of a threaded section (3) in the manner of a nut in order to clamp therebetween a joint (4) and a sealing plate (5), and on the head (1) of which there is mounted by suitable means a plastic cover (9), with a window, for holding the totaliser (6) in the said head (1), characterised in that the cover (9) comprises wedges (8) which project towards the interior; and in that the head (1) comprises corresponding notches (7) so as to enable the two components (1, 9) to be clipped together.

2. Totaliser according to Claim 1, characterised in that the head (1) and the plastic cover (9), on the one hand, and the body (2), on the other hand, comprise external lugs (12′) for positioning a plumbing lead (13) therebetween.

FIG.1

FIG.5

FIG.3

FIG.6

FIG.2

FIG.4